# EUROPEAN PATENT APPLICATION

(11) **EP 4 553 993 A1**
(43) Date of publication of application: **14.05.2025**
(21) Application number: 23857732.4
(22) Date of filing: 23.08.2023
(51) Int. Cl.: H01M 50/54, H01M 50/586, H01M 50/533, H01M 50/105, H01M 50/536

(54) **BRIDGE STRUCTURE AND SECONDARY BATTERY COMPRISING SAME**

(30) Priority: 23.08.2022 KR 20220105698; 23.08.2022 KR 20220105699; 23.08.2022 KR 20220105700
(71) Applicant: LG Energy Solution, Ltd., Seoul 07335 (KR)
(72) Inventor: HONG, Ji Su, Daejeon 34122 (KR); JUNG, Kyung Hwan, Daejeon 34122 (KR); SUH, Min Won, Daejeon 34122 (KR); KANG, Yong Hee, Daejeon 34122 (KR); LEE, Seung Hyun, Daejeon 34122 (KR); CHOI, Kyoung Min, Daejeon 34122 (KR)
(74) Representative: Plasseraud IP
(86) International application number: PCT/KR2023/012506
(87) International publication number: WO 2024/043700

(57) **Abstract**

The present invention relates to a bridge structure, and particularly, to a bridge structure for combining a first electrode assembly and a second electrode assembly with each other that are stacked, and provides a bridge structure, the bridge structure including: a first welding part to which a first electrode tab of the first electrode assembly is bonded; a second welding part to which a second electrode tab of the second electrode assembly is bonded, and which is spaced away from the first welding part in a diagonal direction that is oblique to a stacking direction of the first electrode assembly and the second electrode assembly; and a connecting part which connects the first welding part and the second welding part to each other and extends along the diagonal direction.

## Description

### TECHNICAL FIELD

### CROSS-REFERENCE TO RELATED APPLICATION

The present application claims the benefit of the priority of Korean Patent Application Nos. 10-2022-0105698, 10-2022-0105699, and 10-2022-0105700, filed on August 23, 2022, and 10-2023-0110485, filed on August 23, 2023, which are hereby incorporated by reference in their entirety.

### TECHNICAL FIELD

The present invention relates to a bridge structure and a secondary battery including the same, and more particularly, to a bridge structure capable of incorporating a plurality of electrode assemblies, and a secondary battery including the bridge structure.

### BACKGROUND ART

In general, secondary batteries refer to rechargeable batteries, and they may be used not only as energy sources for small-sized home appliances, such as mobile phones, notebook computers, and camcorders, but they may also be used as energy sources for transport means, such as vehicles. Among these secondary batteries, one of the types of secondary batteries considered energy sources for vehicles is lithium secondary batteries. The lithium secondary battery generally has high performance, high stability, and the like, and is manufactured by selecting a material according to required properties such as battery lifetime, charging or discharging capacities, charging or discharging speed, temperature characteristics, stability, and the like.

In particular, as electric vehicle technology is continuously improved, secondary batteries that are one of three core components of electric vehicles play an important role in the performance of the electric vehicles. Currently, user demands for the electric vehicles has been gradually increasing, and furthermore, needs for higher secondary battery energy density has been gradually increasing. Research for increasing the energy density of the secondary batteries in order to increase mileage of the electric vehicles is being actively carried out with respect to secondary batteries mounted on electric vehicles.

In order to manufacture a secondary battery having high energy density, it is advantageous to increase a thickness of an electrode assembly that is accommodated in the secondary battery and that generates electric energy. However, in order to bond an externally protruding electrode tab protruding to an electrode lead, a length of the electrode tab may be increased as much as the increased thickness of the electrode assembly, and there may be resulting problems in that, when the lengthened electrode tab made of a thin foil, the electrode tab may be easily damaged, such as by being torn due to an impact, which would reduce lifetime of the secondary battery, moreover, when a swelling phenomenon occurs, in which a secondary battery expands occurs as the secondary battery is used, the electrode tab may be damaged as tension applied to the electrode tab increases during the occurrence of the swelling phenomenon.

### DISCLOSURE OF THE INVENTION

### TECHNICAL PROBLEM

An object of the present invention for solving the above problems includes providing a bridge structure capable of combining a plurality of electrode assemblies so that a length of an electrode tab is not increased, and reducing an impact likely to be applied to the electrode tab even when a swelling phenomenon occurs in the electrode assemblies, as well as a secondary battery including the bridge structure.

### TECHNICAL SOLUTION

According to an aspect of the present invention, the present invention provides a bridge structure for combining a first electrode assembly with a second electrode assembly. The bridge structure may include: a first welding part to which an electrode tab of the first electrode assembly is bonded; a second welding part to which an electrode tab of the second electrode assembly is bonded, and which is spaced away from the first welding part in a diagonal direction that is oblique to a stacking direction of the first electrode assembly and the second electrode assembly; and a connecting part which connects the first welding part and the second welding part to each other and extends along the diagonal direction.

The bridge structure may further include a deformation inducing part that is disposed at each of both ends of the connecting part and induces an inclination of the connecting part, so as to be deformed steeper as force is applied thereto.

The deformation inducing part may include: a first deformation inducing part configured to induce an angle between the first welding part and the connecting part varies; and a second deformation inducing part configured to induce an angle between the second welding part and the connecting part varies.

The connecting part may be bent from the first welding part in one direction, and the second welding part may be bent from the connecting part in the other direction.

The bridge structure may include a metal material capable of being elastically deformed at the deformation inducing part.

The first welding part, the connecting part, and the second welding part may be integrally formed as a single member that is continuously provided in a longitudinal direction.

The connecting part may electrically connect the first welding part and the second welding part to each other.

The first welding part and the second welding part may be parallel to each other.

The bridge structure may further include an electrode lead bonded to one of the first welding part and the second welding part.

According to another aspect of the present invention, the present invention may provide a secondary battery including: a first electrode assembly on which a first electrode tab is provided; a second electrode assembly on which a second electrode tab is provided; the bridge structure; and a case that accommodates the first electrode assembly, the second electrode assembly, and the bridge structure. The bridge structure relates to a bridge structure for combining a first electrode assembly and a second electrode assembly with each other that are stacked, and the bridge structure includes: a first welding part to which an electrode tab of the first electrode assembly is bonded; a second welding part to which an electrode tab of the second electrode assembly is bonded, and which is spaced away from the first welding part in a diagonal direction that is oblique to a stacking direction of the first electrode assembly and the second electrode assembly; and a connecting part that connects the first welding part and the second welding part to each other and extends in the diagonal direction.

### ADVANTAGEOUS EFFECTS

According to the present invention, the plurality of electrode assemblies may be combined to manufacture the secondary battery having the increased thickness so that the energy density of the secondary battery is improved, and the bridge structure may be disposed between the electrode lead and the electrode tab so that the electrode tab is provided to have the small length to prevent the damage to the electrode tab that occurs as the length of the electrode tab is increased.

In addition, according to the present invention, when the swelling phenomenon occurs in the secondary battery, the shape of the bridge structure may be elastically deformed, and the impact applied to the electrode tab may be absorbed to reduce the damage to the electrode tab.

### BRIEF DESCRIPTION OF THE DRAWINGS

FIG. 1 is a perspective view illustrating a state of a secondary battery in which a first electrode assembly and a second electrode assembly are combined by a bridge structure according to a first embodiment of the present invention.
FIG. 2 is a view illustrating a state in which the first electrode assembly and the second electrode assembly are combined by the bridge structure when viewed in a direction A in FIG. 1.
FIG. 3 is a perspective view illustrating a configuration of the bridge structure according to the first embodiment of the present invention.
FIGS. 4a, 4b, and 4c are cross-sectional views illustrating a state in which the bridge structure is deformed as force is applied thereto according to the first embodiment of the present invention.
FIG. 5a is a cross-sectional view illustrating a bridge structure according to a second embodiment of the present invention, and FIG. 5b is a cross-sectional view illustrating a bridge structure according to a third embodiment of the present invention.

### MODE FOR CARRYING OUT THE INVENTION

Hereinafter, embodiments of the present invention will be described in more detail with reference to the accompanying drawings. The accompanying drawings are included to provide a further understanding of the present invention, and illustrate merely embodiments of the present invention. The scope of the present invention is not limited by the drawings. In the accompanying drawings, like reference numerals refer to like elements throughout. Some components may be exaggerated, reduced, or omitted to easily understand the present invention.

Moreover, terms or words used in this specification and claims should not be restrictively interpreted based on ordinary meanings or dictionary-based meanings, but rather should be interpreted based on meanings and concepts conforming to the scope of the present invention, on the basis of the principle that an inventor can properly define the concept of a term to describe and explain his or her invention in the best way.

### First embodiment

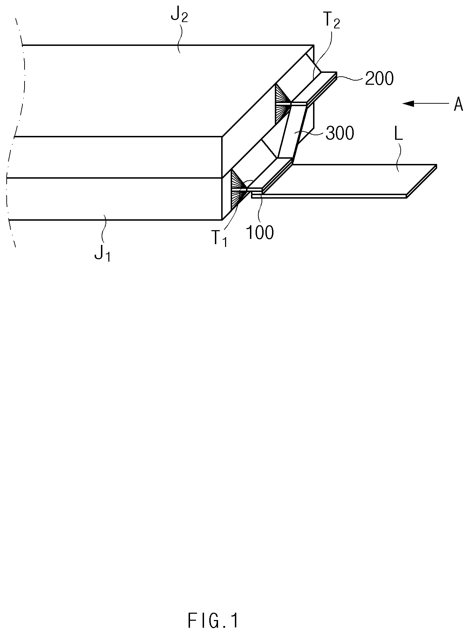

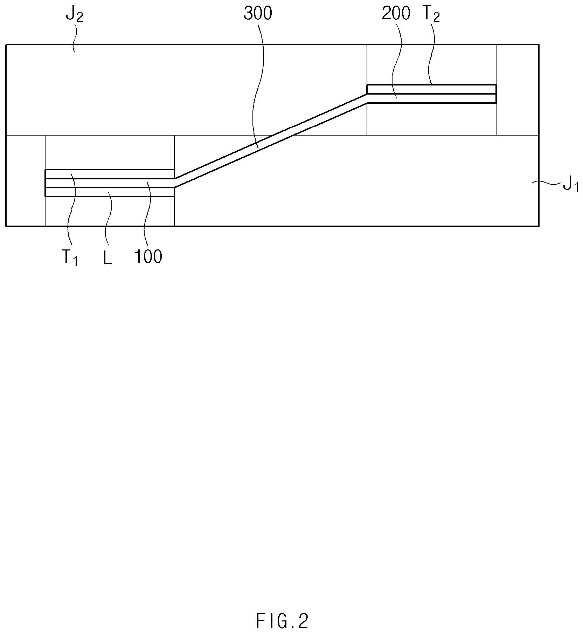

Referring to FIGS. 1 to 3, a bridge structure 10 according to a first embodiment of the present invention may include a first welding part 100, a second welding part 200, and a connecting part 300.

The bridge structure 10 may be disposed to extend between the respective electrode tabs T1 and T2 of a first electrode assembly J1 and a second electrode assembly J2 that are stacked, so as to combine the plurality of stacked electrode assemblies J1 and J2, and thus may be bonded to each of the electrode tabs T1 and T2 of the plurality of electrode assemblies J1 and J2 and electrically connect the plurality of electrode assemblies J1 and J2 to each other.

In addition, as the bridge structure 10 is not bonded to an electrode tab of a single thick electrode assembly, but rather is bonded to each of the electrode tab T1 of the first electrode assembly J1 and the electrode tab T2 of the second electrode assembly J2, the electrode tabs T1 and T2 of the first electrode assembly J1 and the second electrode assembly J2 may be provided to be short in length and bonded to each other.

Each of the electrode assemblies J1 and J2 may have a structure in which a positive electrode current collector/a positive electrode active material layer/a separator/a negative electrode active material layer/a negative electrode current collector are stacked in sequence. The positive electrode current collector may include an area coated with the positive electrode active material layer, and a positive electrode non-coating portion area that is not coated, and the positive electrode non-coating portion area may protrude to the outside of the electrode assembly and be a positive electrode tab. The negative electrode current collector may include an area coated with the negative electrode active material layer, and a negative electrode non-coating portion area that is not coated, and the negative electrode non-coating portion area may protrude to the outside of the electrode assembly and be a negative electrode tab. The separator may be disposed between the positive electrode current collector and the negative electrode current collector so as to prevent the electrode current collectors having different polarities from being in contact with each other.

The first welding part 100 may be disposed at one side of the bridge structure 10, and has one surface to which the first electrode tab T1 of the first electrode assembly J1 is bonded. The first electrode tab T1 of the first electrode assembly J1 may be bonded to the one surface of the first welding part 100 by a method such as welding or soldering.

The first welding part 100 may have a flat plate shape having a predetermined width so that the first electrode tab T1 of the first electrode assembly J1 is bonded thereto.

The first welding part 100 may be made of an electrically conductive metal material so that the first electrode tab T1 of the first electrode assembly J1 and the second electrode tab T2 of the second electrode assembly J2 are electrically connected to each other.

The first welding part 100 may be disposed to be parallel to the first electrode tab T1 of the first electrode assembly J1.

The second welding part 200 may be bonded to the second electrode tab T2 of the second electrode assembly J2, and spaced away from the first welding part 100 in a diagonal direction that is oblique to a stacking direction of the first electrode assembly J1 and the second electrode assembly J2.

As the second welding part 200 is spaced away from the first welding part 100 in the diagonal direction that is oblique to the stacking direction of the first electrode assembly J1 and the second electrode assembly J2, a movement path along which a welding device moves to weld the electrode tabs T1 and T2 of the electrode assemblies J1 and J2 to the first welding part 100 and the second welding part 200, respectively, may be simplified. Additionally, an upper space of the first welding part 100 and the second welding part 200 may be opened so that convenience of welding is improved when the welding device performs the welding.

The second welding part 200 may have a flat plate shape having a predetermined width so that the second electrode tab T2 of the second electrode assembly J2 is bonded thereto.

The second welding part 200 may be made of an electrically conductive metal material so that the first electrode tab T1 of the first electrode assembly J1 and the second electrode tab T2 of the second electrode assembly J2 are electrically connected to each other.

The second welding part 200 may be disposed to be parallel to the second electrode tab T2 of the second electrode assembly J2.

The connecting part 300 may connect the first welding part 100 and the second welding part 200 to each other, and the connecting part 300 may extend in the diagonal direction between the first welding part 100 and the second welding part 200.

The connecting part 300 may be made of an electrically conductive metal material so as to electrically connect the first welding part 100 and the second welding part 200 to each other.

The connecting part 300 may be provided to be bent from the first welding part 100 in one direction, and the second welding part 200 may be provided to be bent from the connecting part 300 in the other direction. As the first welding part 100 and the second welding part 200 are bent in opposite directions, the first welding part 100 and the second welding part 200 may be disposed to be parallel to each other. Moreover, the first welding part 100 and the second welding part 200 may be maintained in a parallel arrangement with respect to each other, even when an inclination of the connecting part 300 in the diagonal direction is deformed.

The first welding part 100, the connecting part 300, and the second welding part 200 may be formed from a single member that is continuous along a longitudinal direction. In the bridge structure 10, the single member continuously extending along the longitudinal direction may be manufactured through a bending process without a separate bonding process, so that the manufacturing costs are reduced and the manufacturing process is simplified.

The bridge structure 10 according to the present embodiment may further include a deformation inducing part 400.

The deformation inducing part 400 may be disposed at each of both ends of the connecting part 300, and may induce the inclination of the connecting part 300 in the diagonal direction to be deformed so as to be steeper or gentler as force is applied thereto.

The bridge structure 10 may include a metal material capable of being elastically deformed at the deformation inducing part 400.

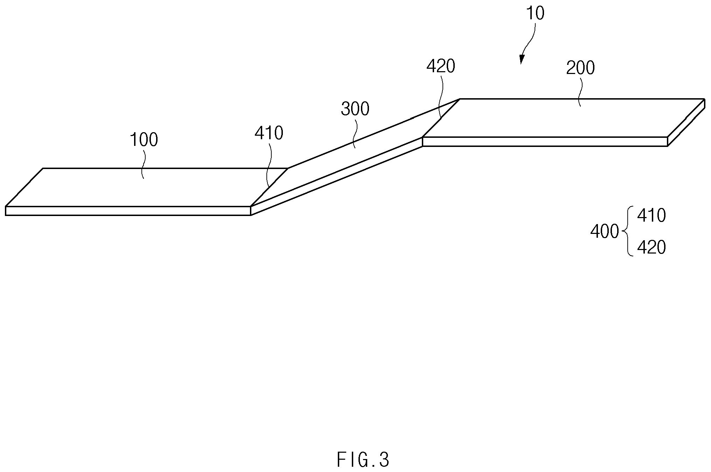

Referring to FIG. 3, the deformation inducing part 400 may include a first deformation inducing part 410 and a first deformation inducing part 420.

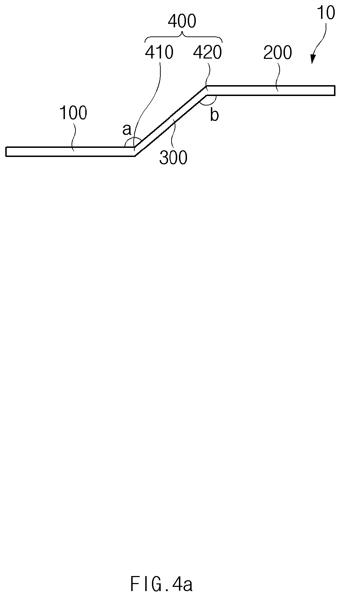

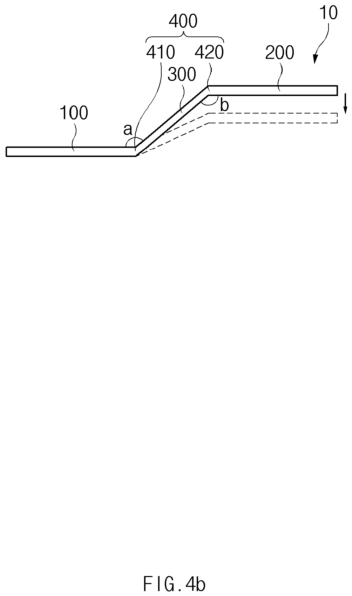

Referring to FIGS. 4a to 4c, the first deformation inducing part 410 may be disposed on one end of the connecting part 300, and may be provided so that an angle a between the first welding part 100 and the connecting part 300 varies.

The first deformation inducing part 410 may be provided on an area in which the connecting part 300 is bent from the first welding part 100 in one direction. As the first deformation inducing part 410 is provided on the area including a bent structure, which is an area on which stress is concentrated, the first deformation inducing part 410 may be deformed when force is applied to the first welding part 100 or the connecting part 300. As the first deformation inducing part 410 is deformed, the angle a between the connecting part 300 and the first welding part 100 may vary.

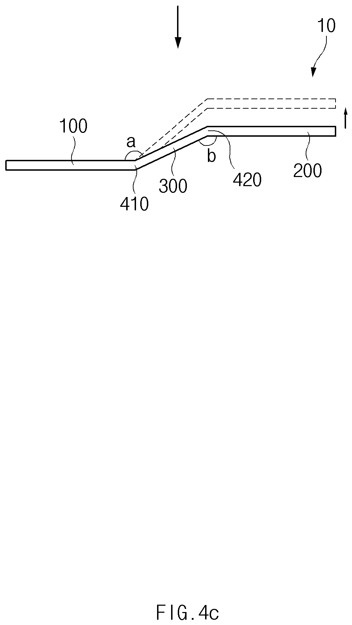

When force is applied to the bridge structure 10 as the electrode assembly expands due to an occurrence of the swelling phenomenon in the secondary battery, the angle a between the connecting part 300 and the first welding part 100 may decrease (see FIG. 4a). When force is applied to the bridge structure 10 as the expanded electrode assembly contracts, the angle a between the connecting part 300 and the first welding part 100 may increase (see FIG. 4c). That is, the bridge structure 10 may change the spacing distance between the electrode tabs T1 and T2 in response to the expansion and contraction deformations of the electrode assembly, so that an impact that may be applied to the electrode tabs T1 and T2 is absorbed.

Referring to FIGS. 4a to 4c, the second deformation inducing part 420 may be disposed on the other end of the connecting part 300, and may be provided so that an angle b between the second welding part 200 and the connecting part 300 varies.

The second deformation inducing part 420 may be provided on an area in which the connecting part 300 is bent from the second welding part 200 in the other direction. As the second deformation inducing part 420 is provided on the area including a bent structure, which is an area on which stress is concentrated, the second deformation inducing part 420 may be deformed when force is applied to the second welding part 100 or the connecting part 300. As the second deformation inducing part 420 is deformed, the angle b between the connecting part 300 and the second welding part 200 may vary.

When force is applied to the bridge structure 10 as the electrode assembly expands due to the occurrence of the swelling phenomenon in the secondary battery, the angle b between the connecting part 300 and the second welding part 200 may decrease (see FIG. 4a). When force is applied to the bridge structure 10 as the expanded electrode assembly contracts, the angle b between the connecting part 300 and the second welding part 200 may increase (see FIG. 4c). That is, the bridge structure 10 may change the spacing distance between the electrode tabs T1 and T2 in response to the expansion and contraction deformations of the electrode assembly, so that an impact that may be applied to the electrode tabs T1 and T2 is absorbed.

When the secondary battery is gradually deteriorated as the secondary battery is repeatedly charged and discharged according to use thereof, the swelling phenomenon in which the secondary battery expands and contracts may occur. When the swelling phenomenon occurs, the electrode assemblies J1 and J2 accommodated in the secondary battery expand to cause the shapes thereof to change. As the shapes of the electrode assemblies J1 and J2 are changed, excessive force may be applied to the electrode tabs T1 and T2 bonded to an electrode lead L, so that the electrode tabs T1 and T2 are damaged to cause short-circuit. In the bridge structure 10 according to the present embodiment, when the swelling phenomenon occurs in the secondary battery, the bridge structure 10 may be deformed to correspond to the change in shape of the electrode tabs T1 and T2, so that the impact that may be applied to the electrode tabs T1 and T2 bonded to the bridge structure 10 is reduced.

In addition, as the bridge structure 10 includes a metal material capable of being elastically deformed at the deformation inducing part 400, when the electrode assemblies J1 and J2, having previously expanded according to the swelling phenomenon, contract again to some extent, the bridge structure 10 may be restored from the deformed shape due to elastic restoring force of the deformation inducing part as much as a degree of contraction of the electrode assemblies J1 and J2 (see FIGS. 4a to 4c).

Moreover, when the first electrode assembly J1 or the second electrode assembly J2 expands due to the occurrence of the swelling phenomenon, an angle at which the connecting part 300 extends along the diagonal direction may be changed. As the angle of the connecting part 300 is changed, the first welding part 100 and the second welding part 200 may minimize an impact applied to the electrode tabs T1 and T2 while moving horizontally and vertically.

The bridge structure 10 may further include the electrode lead L that is bonded to one of the first welding part 100 and the second welding part 200. The electrode lead L may be bonded by being welded to one of the first welding part 100 and the second welding part 200.

The electrode lead L may be bonded directly to the electrode tabs T1 and T2, but an integrated structure may be provided by bonding the electrode lead L to one of the first welding part 100 and the second welding part 200 of the bridge structure 10 so that the bonding of the bridge structure 10 to each of the electrode tabs T1 and T2 of the electrode assemblies J1 and J2 is rapidly performed.

### Second embodiment

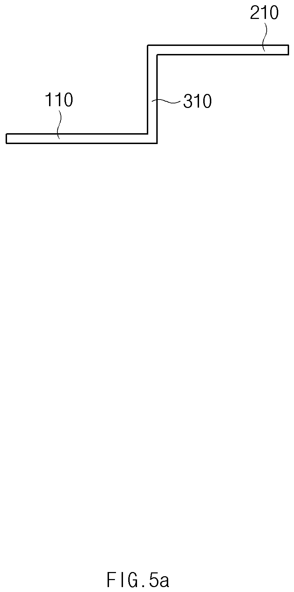

Referring to FIG. 5a, a bridge structure 10 according to a second embodiment of the present invention may include a first welding part 110, a second welding part 210, and a connecting part 310.

The first welding part 110 may have a flat plate shape having a predetermined width so that a first electrode tab T1 of a first electrode assembly J1 is bonded thereto, and may be made of an electrically conductive metal material.

The second welding part 210 may be bonded to a second electrode tab T2 of a second electrode assembly J2, and may be spaced away from the first welding part 110 in a diagonal direction that is oblique to a stacking direction of the first electrode assembly J1 and the second electrode assembly J2.

The second welding part 210 may have a flat plate shape having a predetermined width so that the second electrode tab T2 of the second electrode assembly J2 is bonded thereto.

The second welding part 210 may be made of an electrically conductive metal material.

The connecting part 310 may connect an end of the first welding part 110 and an end of the second welding part 210 to each other. The connecting part 310 may be oriented so as to extend vertically from the first welding part 110.

The connecting part 310 may be made of an electrically conductive metal material so as to electrically connect the first welding part 110 and the second welding part 210 to each other.

The connecting part 310 may be provided to be bent from the first welding part 110 in one direction, and the second welding part 210 may be provided to be bent from the connecting part 310 in the other direction. As the first welding part 110 and the second welding part 210 are bent in opposite directions, the first welding part 110 and the second welding part 210 may be disposed to be parallel to each other.

When a swelling phenomenon occurs in the electrode assemblies J1 and J2, the connecting part 310 extending vertically may be deformed to have an oblique angle with respect to an angle that is vertical, the first welding part 110 and the second welding part 210 may move in directions away from each other, and damage to the bonded electrode tabs T1 and T2 may be prevented.

### Third embodiment

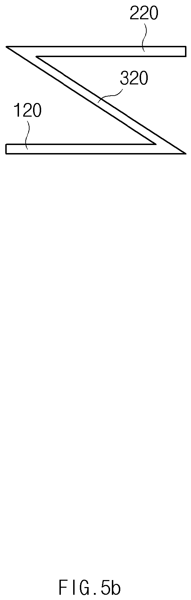

Referring to FIG. 5b, a bridge structure 10 according to a third embodiment of the present invention may include a first welding part 120, a second welding part 220, and a connecting part 320.

The first welding part 120 may have a flat plate shape having a predetermined width so that a first electrode tab T1 of a first electrode assembly J1 is bonded thereto, and the first welding part 120 may be made of an electrically conductive metal material.

The second welding part 220 may be bonded to a second electrode tab T2 of a second electrode assembly J2, and may be disposed from the first welding part 120 in a diagonal direction that is oblique to a stacking direction of the first electrode assembly J1 and the second electrode assembly J2.

The second welding part 220 may have a flat plate shape having a predetermined width so that the second electrode tab T2 of the second electrode assembly J2 is bonded thereto.

The second welding part 220 may be made of an electrically conductive metal material so that the electrode tab T1 of the first electrode assembly J1 and the second electrode tab T2 of the second electrode assembly J2 are electrically connected to each other.

The second welding part 220 may be disposed to be parallel to the electrode tab T2 of the second electrode assembly J2.

The connecting part 320 may connect an end of the first welding part 120 and an end of the second welding part 220 to each other. The connecting part 320 may have an acute angle with respect to each of the first welding part 120 and the second welding part 220. Thus, the first welding part 120, the second welding part 220, and the connecting part 320 may be arranged to collectively define a "Z" shape.

The connecting part 320 may be made of an electrically conductive metal material so as to electrically connect the first welding part 120 and the second welding part 220 to each other.

The connecting part 320 may be provided to be bent from the first welding part 120 in one direction, and the second welding part 220 may be provided to be bent from the connecting part 320 in the other direction. As the first welding part 120 and the second welding part 220 are bent in opposite directions, the first welding part 120 and the second welding part 220 may be disposed to be parallel to each other.

When the electrode assemblies J1 and J2 expand due to an occurrence of a swelling phenomenon in the electrode assemblies J1 and J2, the connecting part 310 having a predetermined angle with respect to each of the first welding part 120 and the second welding part 220 may be deformed in a direction in which an inclination becomes steeper and increases a vertical distance between the first welding part 120 and the second welding part 220. Accordingly, the first welding part 120 and the second welding part 220 may move in directions that are away from each other, and damage to the electrode tabs T1 and T2 bonded thereto may be prevented.

### Fourth embodiment

Referring to FIG. 1, a secondary battery according to a fourth embodiment of the present invention may include a first electrode assembly J1, a second electrode assembly J2, a bridge structure 10, and a case (not shown).

The case (not shown) may accommodate the first electrode assembly J1, the second electrode assembly J2, and the bridge structure 10, and the first electrode assembly J1 and the second electrode assembly J2 may be bonded to the bridge structure 10 so as to be electrically connected to each other. The bridge structure 10 relates to the bridge structure 10 for combining the stacked first electrode assembly J1 and second electrode assembly J2 with each other, and the bridge structure 10 may include a first welding part 100, 110 or 120, to which a first electrode tab T1 of the first electrode assembly J1 is bonded; a second welding part 200, 210 or 220, to which a second electrode tab T2 of the second electrode assembly J2 is bonded, and which is spaced away from the first welding part 100, 110 or 120 in a diagonal direction that is oblique to a stacking direction of the first electrode assembly J1 and the second electrode assembly J2; and a connecting part 300, 310 or 320 that connects the first welding part 100, 110 or 120 and the second welding part 200, 210 or 220 to each other and extends in the diagonal direction. The descriptions of the first to third embodiments may replace the detailed description of the bridge structure 10.

Although the present invention has been described with reference to several embodiments, the present invention is not limited thereto. Changes and modifications to the embodiments can be made without departing from the spirit and scope of the present invention, and those with ordinary skill in the technical field of the present invention are to understand that these changes and modifications are within the scope of the present invention.

### [Description of the Symbols]

10: Bridge structure 100, 110, 120: First welding part
200, 210, 220: Second welding part 300, 310, 320: Connecting part
400: Deformation inducing part 410: First deformation inducing part
420: Second deformation inducing part J1: First electrode assembly
J2: Second electrode assembly T1: First electrode tab
T2: Second electrode tab L: Electrode lead

## Claims

1. A bridge structure for combining a first electrode assembly and a second electrode assembly with each other, the first and second electrode assemblies being stacked, the bridge structure comprising:
a first welding part to which an electrode tab of the first electrode assembly is bonded;
a second welding part to which an electrode tab of the second electrode assembly is bonded, and which is spaced away from the first welding part in a diagonal direction that is oblique to a stacking direction of the first electrode assembly and the second electrode assembly; and
a connecting part connecting the first welding part and the second welding part to each other and extending along the diagonal direction.

2. The bridge structure of claim 1, further comprising a deformation inducing part disposed at each of both ends of the connecting part, and configured to induce an inclination of the connecting part to be steeper as force is applied thereto.

3. The bridge structure of claim 2, wherein the deformation inducing part comprises:
a first deformation inducing part configured to induce an angle between the first welding part and the connecting part varies; and
a second deformation inducing part configured to induce an angle between the second welding part and the connecting part varies.

4. The bridge structure of claim 3, wherein the connecting part is bent from the first welding part in one direction, and
the second welding part is bent from the connecting part in the other direction.

5. The bridge structure of claim 2, wherein the bridge structure comprises a metal material capable of being elastically deformed at the deformation inducing part.

6. The bridge structure of claim 1, wherein the first welding part, the connecting part, and the second welding part are integrally formed as a single member that is continuously provided in a longitudinal direction.

7. The bridge structure of claim 1, wherein the connecting part electrically connects the first welding part and the second welding part to each other.

8. The bridge structure of claim 1, wherein the first welding part and the second welding part are parallel to each other.

9. The bridge structure of claim 1, further comprising an electrode lead bonded to one of the first welding part and the second welding part.

10. A secondary battery comprising:
a first electrode assembly on which a first electrode tab is provided;
a second electrode assembly on which a second electrode tab is provided; and
a bridge structure,
wherein the bridge structure comprises:
a first welding part to which an electrode tab of the first electrode assembly is bonded;
a second welding part to which an electrode tab of the second electrode assembly is bonded, and which is spaced away from the first welding part in a diagonal direction that is oblique to a stacking direction of the first electrode assembly and the second electrode assembly; and
a connecting part connecting the first welding part and the second welding part to each other and extending along the diagonal direction.
